# DEMANDE DE BREVET EUROPEEN

(11) **EP 2 080 679 A1**
(43) Date de publication de la demande: **22.07.2009**
(21) Numéro de dépôt: 09150603.0
(22) Date de dépôt: 15.01.2009
(51) Int. Cl.: B60S 1/08

(54) **Dispositif d'essuyage d'une glace de véhicule automobile à zones d'essuyage de fréquences de balayage différentes**

(30) Priorité: 18.01.2008 FR 0850334
(71) Demandeur: Peugeot Citroën Automobiles Société Anonyme, 78140 Velizy Villacoublay (FR)
(72) Inventeur: Barron, Gilles, 25420, Bart (FR)
(74) Mandataire: Vigand, Régis Louis Michel

(57) **Abrégé**

Un dispositif (D) est dédié à l'essuyage d'une glace (G) d'un véhicule automobile, et comprend un bras d'essuyage (BE) couplé à un moteur (M) de manière à être déplacé alternativement entre des première (P1) et seconde (P2) positions d'extrémité pour essuyer une zone principale (ZP) de la glace (G). Ce dispositif (D) comprend également des moyens de contrôle (MC) chargés de contrôler le moteur (M) pour qu'il définisse un cycle de balayage permettant au bras d'essuyage (BE) d'essuyer une sous-partie choisie (SP) de la zone principale (ZP) selon une fréquence (F2) strictement supérieure à la fréquence de balayage (F1) de l'intégralité de la zone principale (ZP).

## Description

L'invention concerne les dispositifs d'essuyage de glace de véhicules automobiles, également appelés essuie-glaces, et plus précisément le contrôle des cycles de balayage de tels dispositifs.

Un dispositif d'essuyage de glace comprend généralement un bras d'essuyage qui est couplé à un moteur de manière à être déplacé alternativement entre des première et seconde positions d'extrémité pour balayer, et donc essuyer, une zone principale de la glace.

Dans certaines situations, comme par exemple en présence de fortes pluies et/ou lorsque le véhicule circule à vitesse élevée, la fréquence d'essuyage de la zone principale ne permet plus d'évacuer l'eau suffisamment rapidement, y compris lorsque la vitesse du moteur du dispositif est maximale. La visibilité du conducteur du véhicule est alors (très) réduite, ce qui peut s'avérer (très) dangereux.

Pour remédier à cet inconvénient il est certes possible d'utiliser un moteur plus puissant et donc capable d'assurer un balayage plus rapide. Mais, cela entraîne un surcoût et peut accélérer l'usure du mécanisme de couplage du bras d'essuyage au moteur.

Une autre solution consiste à prévoir un mode de fonctionnement dans lequel les déplacements du bras d'essuyage sont limités. La fréquence de balayage est ainsi augmentée du fait que le balayage ne se fait plus que sur une sous-partie de la zone principale de la glace. Cette solution est notamment décrite dans les documents brevet US 4,934014 et EP 484292. L'inconvénient principal de cette solution réside dans le fait que le champ d'observation du conducteur est limité à la seule sous-partie de la zone principale de la glace du fait que le reste de la zone principale n'est plus balayé, ce qui peut s'avérer dangereux.

L'invention a pour but d'améliorer la situation sans faire appel à un moteur plus puissant.

Elle propose à cet effet un dispositif, dédié à l'essuyage d'une glace de véhicule automobile, et comprenant un moteur et un bras d'essuyage couplé au moteur de manière à être déplacé alternativement entre des première et seconde positions d'extrémité pour essuyer une zone principale de la glace.

Ce dispositif d'essuyage se caractérise par le fait qu'il comprend des moyens de contrôle chargés de contrôler le moteur pour qu'il définisse un cycle de balayage (modifié) permettant au bras d'essuyage d'essuyer une sous-partie choisie de la zone principale selon une deuxième fréquence qui est strictement supérieure à une première fréquence de balayage de l'intégralité de la zone principale en permettant toujours de balayer l'intégralité de la zone principale selon la première fréquence.

Le dispositif d'essuyage selon l'invention peut comporter d'autres caractéristiques qui peuvent être prises séparément ou en combinaison, et notamment :
- la fréquence de balayage de la sous-partie choisie peut être au moins deux fois supérieure à la fréquence de balayage de l'intégralité de la zone principale ;
- la sous-partie choisie peut être définie par des première et seconde positions intermédiaires du bras d'essuyage, intercalées entre les première et seconde positions d'extrémité ;
   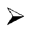 le cycle de balayage (modifié) peut comprendre i) une première partie dans laquelle le moteur déplace le bras d'essuyage de sa première position d'extrémité vers sa première position intermédiaire, puis ii) une deuxième partie dans laquelle le moteur déplace le bras d'essuyage de sa première position intermédiaire vers sa seconde position intermédiaire, puis iii) une troisième partie dans laquelle le moteur déplace le bras d'essuyage de sa seconde position intermédiaire vers sa seconde position d'extrémité, puis iv) une quatrième partie dans laquelle le moteur déplace le bras d'essuyage de sa seconde position d'extrémité vers sa première position d'extrémité ;
   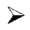 dans une variante, le cycle de balayage (modifié) peut comprendre i) une première partie dans laquelle le moteur déplace le bras d'essuyage de sa première position d'extrémité vers sa première position intermédiaire, puis ii) une deuxième partie dans laquelle le moteur déplace le bras d'essuyage de sa première position intermédiaire vers sa seconde position intermédiaire, puis iii) une troisième partie dans laquelle le moteur déplace le bras d'essuyage de sa seconde position intermédiaire vers sa seconde position d'extrémité, puis iv) une quatrième partie dans laquelle le moteur déplace le bras d'essuyage de sa seconde position d'extrémité vers sa seconde position intermédiaire, puis v) une cinquième partie dans laquelle le moteur déplace le bras d'essuyage de sa seconde position intermédiaire vers sa première position intermédiaire, puis vi) une sixième partie dans laquelle le moteur déplace le bras d'essuyage de sa première position intermédiaire vers sa première position d'extrémité ;
- dans une variante, la sous-partie choisie peut être définie par l'une des première et seconde positions d'extrémité et par une position intermédiaire du bras d'essuyage, intercalée entre les première et seconde positions d'extrémité ;
   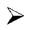 le cycle de balayage (modifié) peut comprendre i) une première partie dans laquelle le moteur déplace le bras d'essuyage de sa première position d'extrémité vers sa position intermédiaire, puis ii) une deuxième partie dans laquelle le moteur déplace le bras d'essuyage de sa position intermédiaire vers sa première position d'extrémité, puis iii) une troisième partie dans laquelle le moteur déplace le bras d'essuyage de sa première position d'extrémité vers sa seconde position d'extrémité, puis iv) une quatrième partie dans laquelle le moteur déplace le bras d'essuyage de sa seconde position d'extrémité vers sa première position d'extrémité ;
- le moteur peut être propre à entraîner en translation le bras d'essuyage par rapport à la glace.

L'invention propose également un procédé permettant de déplacer alternativement un bras d'essuyage entre des première et seconde positions d'extrémité pour essuyer une zone principale d'une glace de véhicule automobile.

Ce procédé se caractérise par le fait qu'il permet également de déplacer le bras d'essuyage selon un cycle de balayage dans lequel il essuie une sous-partie choisie de la zone principale selon une fréquence strictement supérieure à la fréquence de balayage de l'intégralité de la zone principale.

D'autres caractéristiques et avantages de l'invention apparaîtront à l'examen de la description détaillée ci-après, et des dessins annexés, sur lesquels :
- la figure 1 illustre schématiquement et fonctionnellement une lunette arrière de véhicule automobile équipée d'un premier exemple de dispositif d'essuyage selon l'invention,
- la figure 2 est un diagramme temporel représentant le cycle de balayage classique (C1) du bras d'essuyage du dispositif d'essuyage des figures 1 et 5,
- la figure 3 est un diagramme temporel représentant un premier exemple de cycle de balayage modifié (C2) du bras d'essuyage du dispositif d'essuyage de la figure 1,
- la figure 4 est un diagramme temporel représentant un second exemple de cycle de balayage modifié (C2') du bras d'essuyage du dispositif d'essuyage de la figure 1,
- la figure 5 illustre schématiquement et fonctionnellement une lunette arrière de véhicule automobile équipée d'un second exemple de dispositif d'essuyage selon l'invention, et
- la figure 6 est un diagramme temporel représentant un exemple de cycle de balayage modifié (C2") du bras d'essuyage du dispositif d'essuyage de la figure 5.

Les dessins annexés pourront non seulement servir à compléter l'invention, mais aussi contribuer à sa définition, le cas échéant.

L'invention propose un dispositif d'essuyage d'une glace de véhicule automobile. Dans ce qui suit, on considère à titre d'exemple non limitatif que la glace est la lunette arrière d'un véhicule. Mais, l'invention n'est pas limitée à la lunette arrière. Elle concerne tout type de glace de véhicule automobile, et notamment le pare-brise.

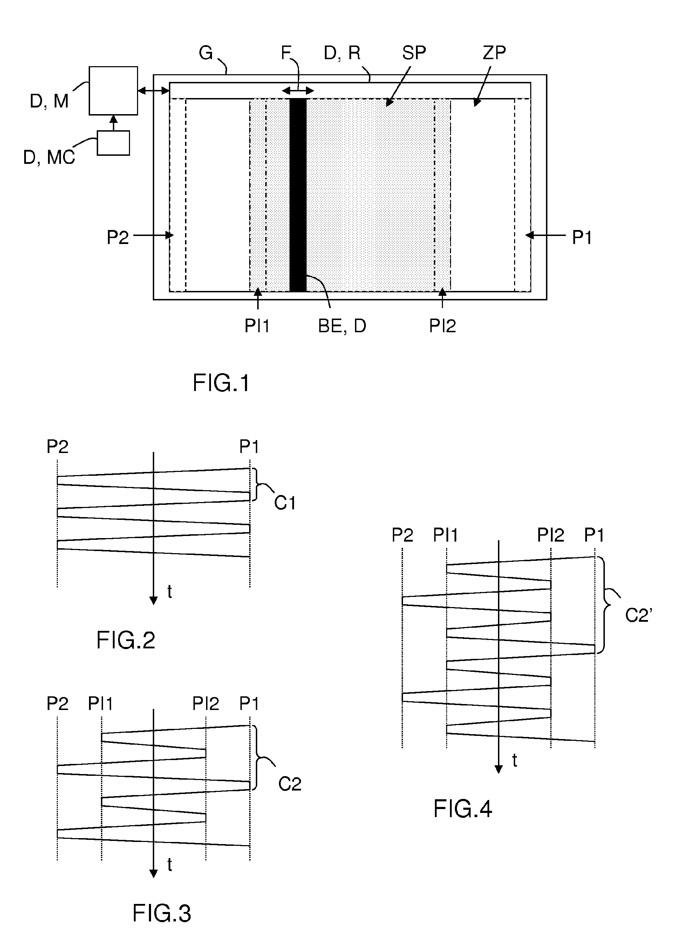

On a schématiquement représenté sur la figure 1 un exemple de lunette arrière (glace) G de véhicule automobile équipée d'un exemple de dispositif d'essuyage D selon l'invention.

Ce dispositif d'essuyage D comprend un bras d'essuyage BE qui est couplé à un moteur électrique M via un mécanisme de couplage non représenté.

Dans l'exemple non limitatif illustré, le moteur M et le mécanisme de couplage sont destinés à déplacer le bras d'essuyage BE en translation, de façon alternative (matérialisée par la flèche à double sens F). Mais, l'invention n'est pas limitée à ce type de déplacement. Elle concerne en effet tout type de déplacement, et notamment les déplacements rotatifs.

Le déplacement translatif (ou linéaire) du bras d'essuyage BE peut par exemple se faire au moyen d'une crémaillère ou de câbles et d'un rail de guidage R.

Le dispositif D comprend également un module de contrôle MC chargé de contrôler le fonctionnement du moteur M, et plus précisément sa vitesse de fonctionnement et les cycles de balayage du bras d'essuyage BE qu'il entraîne.

Le module de contrôle MC fait par exemple partie du moteur M et reçoit ses instructions de la manette de commande de l'essuyage et/ou de l'ordinateur de bord du véhicule. Mais, il pourrait également faire partie de l'ordinateur de bord du véhicule. Il est chargé de transformer une instruction reçue en une commande compréhensible par le moteur M et destinée à le contraindre à fonctionner selon un mode de fonctionnement choisi. Il peut être réalisé sous la forme de circuits électroniques ou d'une combinaison de circuits électroniques et de modules logiciels (ou informatiques).

Dans un mode de fonctionnement classique (quelle que soit la vitesse sélectionnée), le moteur M et le mécanisme de couplage déplacent (ici translatent) le bras d'essuyage BE alternativement entre des première P1 et seconde P2 positions d'extrémité (matérialisées en pointillés). Le bras d'essuyage BE balaye ainsi, et donc essuie, une zone principale ZP de la glace G.

Dans l'exemple non limitatif illustré, la zone principale ZP est sensiblement rectangulaire et s'étend (transversalement) entre les première P1 et seconde P2 positions d'extrémité.

On a schématiquement représenté sur la figure 2 le diagramme temporel (t) représentant le cycle de balayage classique C1, du bras d'essuyage BE du dispositif d'essuyage D de la figure 1, lorsque le module de contrôle MC contraint le moteur M à fonctionner selon le mode de fonctionnement classique précité. On comprendra qu'au cours de chaque cycle classique C1 le bras d'essuyage BE passe alternativement de sa première position d'extrémité P1 à sa seconde position d'extrémité P2, puis de sa seconde position d'extrémité P2 à sa première position d'extrémité P1.

Selon l'invention, le module de contrôle MC est également agencé de manière à contrôler le moteur M pour qu'il définisse un cycle de balayage dit «modifié» C2 (ou C2' ou encore C2"). Ce dernier est destiné à permettre au bras d'essuyage BE d'essuyer une sous-partie choisie SP (grisée) de la zone principale ZP selon une fréquence F2 qui est strictement supérieure à la fréquence de balayage F1 de l'intégralité de la zone principale ZP.

En d'autres termes, le cycle modifié C2 (ou C2' ou encore C2") permet toujours de balayer l'intégralité de la zone principale ZP selon une fréquence F1, mais également une sous-partie choisie SP (grisée) de cette zone principale ZP selon une fréquence F2 strictement supérieure à F1.

La sous-partie choisie SP peut être définie n'importe où à l'intérieur de la zone principale ZP, selon les besoins. De même, son extension transversale (suivant une direction parallèle à la direction de translation du bras d'essuyage BE) peut être choisie en fonction des besoins.

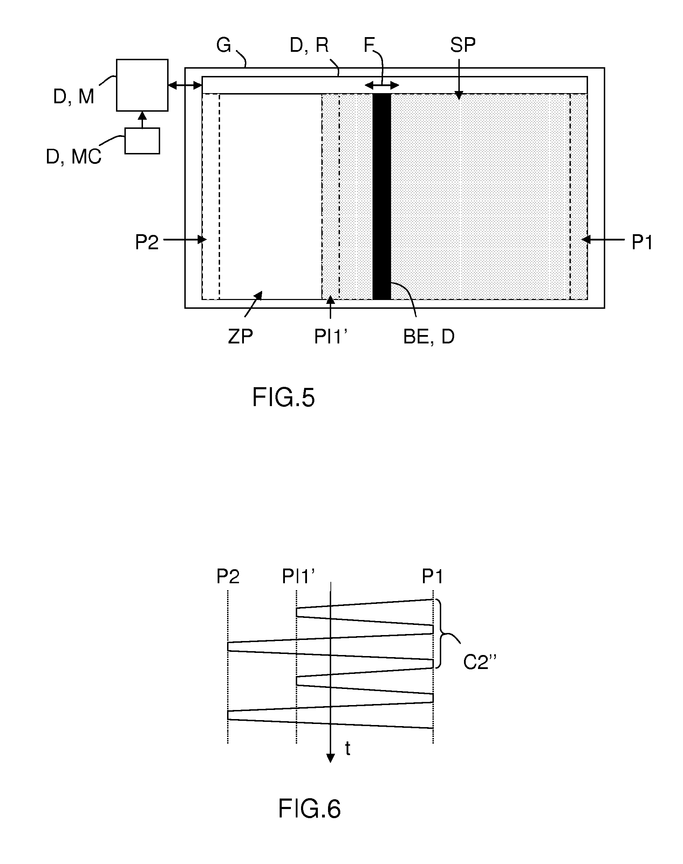

On comprendra que la sous-partie choisie SP est définie par deux positions choisies du bras d'essuyage BE, qui peuvent être soit des première PI1 et seconde PI2 positions intermédiaires intercalées entre les première P1 et seconde P2 positions d'extrémité, comme dans l'exemple non limitatif illustré sur la figure 1 (où elles sont matérialisés par des tirets), soit l'une des première P1 et seconde P2 positions d'extrémité et une position intermédiaire PI1' (matérialisée par une alternance de tirets et de points), intercalée entre les première P1 et seconde P2 positions d'extrémité, comme dans l'exemple non limitatif illustré sur la figure 5. On notera que dans le second exemple de dispositif D illustré sur la figure 5 P1 et PI1' bornent la sous-partie SP (grisée). Mais, dans une variante la sous-partie SP pourrait être bornée par P2 et PI2'.

Dans l'exemple non limitatif illustré sur la figure 1, la distance séparant la première position d'extrémité P1 de la seconde position intermédiaire PI2 est sensiblement égale à la distance séparant la seconde position d'extrémité P2 de la première position intermédiaire PI1. Mais cela n'est pas obligatoire. La sous-partie choisie SP peut en effet être décentrée dans la zone principale ZP.

De nombreux types de cycle modifié C2 (ou C2' ou encore C2") permettant d'obtenir une fréquence F2 strictement supérieure à la fréquence F1 peuvent être envisagés. De préférence, F2 est au moins deux fois supérieure à F1. C'est notamment le cas dans les trois exemples non limitatifs de cycle modifié C2, C2' et C2" dont les diagrammes temporels sont illustrés sur les figures 3, 4 et 6.

Comme cela est illustré sur la figure 3, chaque premier exemple de cycle modifié C2 comprend :
- une première partie dans laquelle le moteur M déplace le bras d'essuyage BE de sa première position d'extrémité P1 vers sa première position intermédiaire PI1, puis
- une deuxième partie dans laquelle le moteur M déplace le bras d'essuyage BE de sa première position intermédiaire PI1 vers sa seconde position intermédiaire PI2, puis
- une troisième partie dans laquelle le moteur M déplace le bras d'essuyage BE de sa seconde position intermédiaire PI2 vers sa seconde position d'extrémité P2, puis
- une quatrième partie dans laquelle le moteur M déplace le bras d'essuyage BE de sa seconde position d'extrémité P2 vers sa première position d'extrémité P1.

Dans ce premier exemple de cycle modifié C2, on peut constater que la sous-partie SP est intégralement balayée 4 fois lorsque la zone principale ZP est intégralement balayée 2 fois, si bien que l'on a F2 = 2xF1.

Comme cela est illustré sur la figure 4, chaque deuxième exemple de cycle modifié C2' comprend :
- une première partie dans laquelle le moteur M déplace le bras d'essuyage BE de sa première position d'extrémité P1 vers sa première position intermédiaire PI1, puis
- une deuxième partie dans laquelle le moteur M déplace le bras d'essuyage BE de sa première position intermédiaire PI1 vers sa seconde position intermédiaire P12, puis
- une troisième partie dans laquelle le moteur M déplace le bras d'essuyage BE de sa seconde position intermédiaire PI2 vers sa seconde position d'extrémité P2, puis
- une quatrième partie dans laquelle le moteur M déplace le bras d'essuyage BE de sa seconde position d'extrémité P2 vers sa seconde position intermédiaire P12, puis
- une cinquième partie dans laquelle le moteur M déplace le bras d'essuyage BE de sa seconde position intermédiaire PI2 vers sa première position intermédiaire PI1, puis
- une sixième partie dans laquelle le moteur M déplace le bras d'essuyage BE de sa première position intermédiaire PI1 vers sa première position d'extrémité P1.

Dans ce deuxième exemple de cycle modifié C2', on peut constater que la sous-partie SP est intégralement balayée 6 fois lorsque la zone principale ZP est intégralement balayée 2 fois, si bien que l'on a F2 = 3xF1.

Comme cela est illustré sur la figure 6, chaque troisième exemple de cycle modifié C2" comprend :
- une première partie dans laquelle le moteur M déplace le bras d'essuyage BE de sa première position d'extrémité P1 vers sa position intermédiaire PI1', puis
- une deuxième partie dans laquelle le moteur M déplace le bras d'essuyage BE de sa position intermédiaire PI1' vers sa première position d'extrémité P1, puis
- une troisième partie dans laquelle le moteur M déplace le bras d'essuyage BE de sa première position d'extrémité P1 vers sa seconde position d'extrémité P2, puis
- une quatrième partie dans laquelle le moteur M déplace le bras d'essuyage BE de sa seconde position d'extrémité P2 vers sa première position d'extrémité P1.

Dans ce troisième exemple de cycle modifié C2", on peut constater que la sous-partie SP est intégralement balayée 4 fois lorsque la zone principale ZP est intégralement balayée 2 fois, si bien que l'on a F2 = 2xF1.

L'invention ne se limite pas aux modes de réalisation de dispositif d'essuyage décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de dispositif d'essuyage assurant un balayage linéaire (ou en translation). Mais, le dispositif d'essuyage selon l'invention pourrait également et notamment assurer un balayage rotatif.

## Revendications

1. Dispositif (D) d'essuyage d'une glace (G) de véhicule automobile, comprenant un moteur (M) et un bras d'essuyage (BE) couplé audit moteur (M) de manière à être déplacé alternativement entre des première (P1) et seconde (P2) positions d'extrémité pour essuyer une zone principale (ZP) de ladite glace (G), **caractérisé en ce qu'**il comprend des moyens de contrôle (MC) agencés pour contrôler ledit moteur (M) de sorte qu'il définisse un cycle de balayage permettant audit bras d'essuyage (BE) d'essuyer une sous-partie choisie (SP) de ladite zone principale (ZP) selon une deuxième fréquence (F2) strictement supérieure à une première fréquence de balayage (F1) de l'intégralité de ladite zone principale (ZP) en permettant toujours de balayer l'intégralité de la zone principale (ZP) selon la première fréquence (F1).

2. Dispositif selon la revendication 1, **caractérisé en ce que** ladite fréquence de balayage (F2) de la sous-partie choisie (SP) est au moins deux fois supérieure à la fréquence de balayage (F1) de l'intégralité de ladite zone principale (ZP).

3. Dispositif selon l'une des revendications 1 et 2, **caractérisé en ce que** ladite sous-partie choisie (SP) est définie par des première (PI1) et seconde (PI2) positions intermédiaires dudit bras d'essuyage (BE), intercalées entre lesdites première (P1) et seconde (P2) positions d'extrémité.

4. Dispositif selon la revendication 3, **caractérisé en ce que** ledit cycle de balayage comprend i) une première partie dans laquelle le moteur (M) déplace ledit bras d'essuyage (BE) de sa première position d'extrémité (P1) vers sa première position intermédiaire (PI1), puis ii) une deuxième partie dans laquelle le moteur (M) déplace ledit bras d'essuyage (BE) de sa première position intermédiaire (PI1) vers sa seconde position intermédiaire (PI2), puis iii) une troisième partie dans laquelle le moteur (M) déplace ledit bras d'essuyage (BE) de sa seconde position intermédiaire (PI2) vers sa seconde position d'extrémité (P2), puis iv) une quatrième partie dans laquelle le moteur (M) déplace ledit bras d'essuyage (BE) de sa seconde position d'extrémité (P2) vers sa première position d'extrémité (P1).

5. Dispositif selon la revendication 3, **caractérisé en ce que** ledit cycle de balayage comprend i) une première partie dans laquelle le moteur (M) déplace ledit bras d'essuyage (BE) de sa première position d'extrémité (P1) vers sa première position intermédiaire (PI1), puis ii) une deuxième partie dans laquelle le moteur (M) déplace ledit bras d'essuyage (BE) de sa première position intermédiaire (PI1) vers sa seconde position intermédiaire (PI2), puis iii) une troisième partie dans laquelle le moteur (M) déplace ledit bras d'essuyage (BE) de sa seconde position intermédiaire (PI2) vers sa seconde position d'extrémité (P2), puis iv) une quatrième partie dans laquelle le moteur (M) déplace ledit bras d'essuyage (BE) de sa seconde position d'extrémité (P2) vers sa seconde position intermédiaire (PI2), puis v) une cinquième partie dans laquelle le moteur (M) déplace ledit bras d'essuyage (BE) de sa seconde position intermédiaire (PI2) vers sa première position intermédiaire (PI1), puis vi) une sixième partie dans laquelle le moteur (M) déplace ledit bras d'essuyage (BE) de sa première position intermédiaire (PI1) vers sa première position d'extrémité (P1).

6. Dispositif selon l'une des revendications 1 et 2, **caractérisé en ce que** ladite sous-partie choisie (SP) est définie par l'une desdites première (P1) et seconde (P2) positions d'extrémité et par une position intermédiaire (PI1') dudit bras d'essuyage (BE), intercalée entre lesdites première (P1) et seconde (P2) positions d'extrémité.

7. Dispositif selon la revendication 6, **caractérisé en ce que** ledit cycle de balayage comprend i) une première partie dans laquelle le moteur (M) déplace ledit bras d'essuyage (BE) de sa première position d'extrémité (P1) vers sa position intermédiaire (PI1'), puis ii) une deuxième partie dans laquelle le moteur (M) déplace ledit bras d'essuyage (BE) de sa position intermédiaire (PI1') vers sa première position d'extrémité (P1), puis iii) une troisième partie dans laquelle le moteur (M) déplace ledit bras d'essuyage (BE) de sa première position d'extrémité (P1) vers sa seconde position d'extrémité (P2), puis iv) une quatrième partie dans laquelle le moteur (M) déplace ledit bras d'essuyage (BE) de sa seconde position d'extrémité (P2) vers sa première position d'extrémité (P1).

8. Dispositif selon l'une des revendications 1 à 7, **caractérisé en ce que** ledit moteur est propre à entraîner en translation ledit bras d'essuyage (BE) par rapport à ladite glace (G).

9. Procédé d'essuyage d'une glace (G) de véhicule automobile, ledit procédé consistant à déplacer alternativement un bras d'essuyage (BE) entre des première (P1) et seconde (P2) positions d'extrémité pour essuyer une zone principale (ZP) de ladite glace (G), **caractérisé en ce qu'**il consiste également à déplacer ledit bras d'essuyage (BE) selon un cycle de balayage dans lequel il essuie une sous-partie choisie (SP) de ladite zone principale (ZP) selon une fréquence (F2) strictement supérieure à une fréquence de balayage (F1) de l'intégralité de ladite zone principale (ZP).
